# EUROPÄISCHE PATENTSCHRIFT

(11) **EP 2 578 952 B1**
(45) Veröffentlichungstag und Bekanntmachung des Hinweises auf die Patenterteilung: **24.02.2016**
(21) Anmeldenummer: 12005813.6
(22) Anmeldetag: 10.08.2012
(51) Int. Cl.: F24D 19/10, F24D 19/00, G05D 23/19

(54) **Temperaturdifferenzregler in Einrohrheizsystemen**
Temperature difference regulator in single pipe heating systems
Régulateur de différence de température dans les systèmes de chauffage à tube unique

(30) Priorität: 07.10.2011 DE 102011115101
(43) Veröffentlichungstag der Anmeldung: 10.04.2013
(73) Patentinhaber: Gemeinnützige Wohnungsbaugesellschaft der Stadt Kassel mbH, 34117 Kassel (DE)
(72) Erfinder: Steppan, Heiko, 34613 Schwalmstadt (DE)
(74) Vertreter: REHBERG HÜPPE + PARTNER

(56) Entgegenhaltungen:
- EP-A1- 0 150 671
- EP-A2- 2 434 226
- WO-A1-97/02457
- GB-A- 1 185 442

## Beschreibung

### Stand der Technik

Die vorliegende Erfindung liegt auf dem Gebiet der Regelungstechnik für Heizsysteme für Wohnungen. Sie betrifft insbesondere ein Verfahren zur Regelung von Einrohrheizsystemen in Mehrfamilienhäusern, wobei ein Wasser mit Vorlauftemperatur führendes Rohr die Heizkörper mehrerer Wohnungen mit Heizleistung versorgt, wobei mehrere Heizkörper in Reihe hintereinander geschaltet sind, und eine Heizstrecke bilden, wobei der Rücklauf aus einem Heizkörper sich mit dem Vorlauf für den nächsten stromab liegenden Heizkörper mischt (Einrohrsystem), und der Beginn der Heizstrecke mit dem am meisten stromaufliegenden Heizkörper, gebildet ist, und wobei der Rücklauf aus den in Reihe geschalteten Heizkörpern das Ende der Heizstrecke bildet.

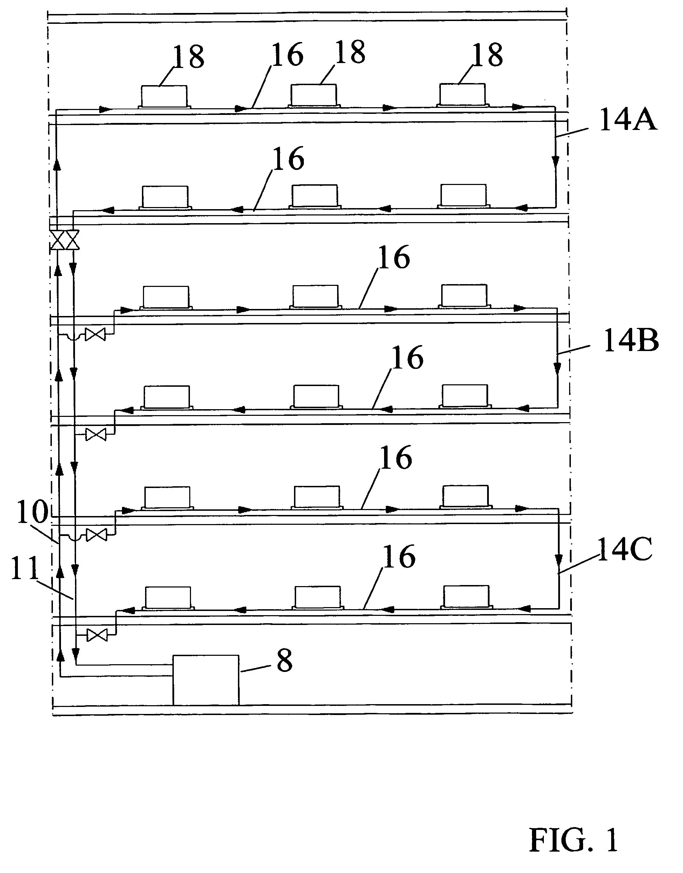

Figur 1 zeigt schematisch einen Schaltplan für ein Einrohrheizsystem nach dem Stand der Technik anhand eines 5-geschossigen Wohnhauses mit drei verschiedenen Einrohr - Heizkreisen, oder Heizstrecken im o.g. Sinne;

Gemäß Figur 1 erzeugt ein schematisch dargestellter Heizkessel 8 eine gewisse Wärmeleistung für ein Einrohrheizsystem mit einer Anzahl von drei Einrohrsträngen, auch Heizstrecken 14A, 14B und 14C. Die Heizstrecken 14A, 14B und 14C werden über eine gemeinsame Vorlaufleitung 10 mit einem Volumenstrom von beispielsweise 2,1 Kubikmeter pro Stunde und einer bestimmten, voreingestellten Vorlauftemperatur von beispielsweise 50° C versorgt. Auch der Rücklauf erfolgt über eine gemeinsame Leitung 11.

Die Heizstrecken 14A, 14B und 14C enthalten zum Zwecke einer besseren Übersichtlichkeit nicht eingezeichnete Heizflächen in Form von explizit vorgesehenen Heizkörpern, sowie auch von Sockelleitungen, die ebenfalls als Heizfläche wirken.
Diese Sockelleitungen sind mit Bezugszeichen 16 und die Heizkörper mit Bezugszeichen 18 versehen. Wie ersichtlich, bekommt der stromab vom ersten Heizkörper 18 angeordnete zweite Heizkörper der Heizstrecke eine etwas geringere Vorlauftemperatur als der erste Heizkörper, weil der erste Heizkörper ja bereits seinen eigenen Rücklauf in die gemeinsame Versorgungsstrangleitung einspeist. Dieses Prinzip setzt sich stromabwärts fort.

In diesem speziellen Stand der Technik sind mit anderen Worten alle Heizkörper einer Einrohrheizung an einem Strang -auch Heizstrang genannt- hintereinander geschaltet. Die einzelnen Heizkörper werden von einem Teilstrom der Strangwasserdurchsatzes (in der Regel 30 % - 50 %) durchströmt und geben den abgenommenen Teilstrom in abgekühlter Form an den Hauptstrang zurück, wodurch die Vorlauftemperatur für den nächsten, stromabwärts liegenden "Folgeheizkörper" der Hintereinanderschaltung etwas geringer wird. Um dies auszugleichen sind die Heizflächen der jeweils nachfolgenden Heizkörper etwas vergrößert gegenüber dem jeweiligen direkt stromaufwärts liegenden Heizkörper. Dabei verläuft der Hauptstrang, der die einzelnen hintereinander geschalteten Heizkörper versorgt, oft durch mehrere Wohnungen und besitzt bereits für sich genommen - ohne die Heizfläche der eigentlichen Heizkörper - eine beträchtliche Heizfläche.

Diese Einrohrheizsysteme stammen meist aus den 1960er, 1970er Jahren. In den darauf folgenden Zeiten mit immer teurerer werdender Primärenergie wurden zunehmend an den betreffenden Wohneinheiten bauliche Verbesserungen durchgeführt, die eine bessere thermische Isolierung einer Wohnung gegenüber der Umwelt ermöglichen. Dabei seien moderne Isolierglasfenster und die so genannte Fassadenisolierung im Besonderen genannt. Diese umfassend durchgeführten Regelungsmaßnahmen haben den Wärmeverlust der Wohnungen in der kalten Jahreszeit erheblich reduziert. Daraus entsteht nun jedoch ein neues Problem, das bislang nur unzureichend gelöst werden kann:
Diejenigen Wohnungen, die beispielsweise in einem Mehrfamilienwohnhaus jeweils am stromaufseitigen Beginn einer Heizstrecke liegen, werden mit der höchsten Vorlauftemperatur versorgt. Hier tritt nun oft der Fall auf, dass die Wohnungen am Beginn der Heizstrecke mit der höchsten Vorlauftemperatur bereits überheizt sind, nur aufgrund der Wärmeabgabe des Heizungsstrangs ohne die Heizfläche der Heizkörper selbst, der die Heizstrecke eines Wohnungsstrangs versorgt. Dies gilt insbesondere dann, wenn sämtliche Heizkörper in einer solchen Wohnung zugedreht sind, denn die Heizfläche des Rohrstrangs an sich ist bereits groß genug, um bei der vorliegend hohen Vorlauftemperatur für eine entsprechende Überhitzung der Wohnung zu sorgen. Der Bewohner einer solchen Wohnung, die mit sehr hoher Vorlauftemperatur versorgt wird, kann also nichts anderes machen, als seine Wohnung durch entsprechende ausgiebige Lüftung wieder abzukühlen. Dies ist jedoch wiederum reine Energieverschwendung, die kontraproduktiv zu den zuvor erwähnten Wärmeisolierungsmaßnahmen wirkt.

In dieser Situation würde es auch nichts helfen, die Vorlauftemperatur abzusenken, denn dann würde man das Risiko eingehen, dass eine Wohnung, die am Ende der Heizstrecke dieses Heizstranges liegt, nur noch unzureichend beheizt werden kann, weil dort dann die Vorlauftemperatur zu niedrig ist.

Die technische Ursache für dieses Problem besteht nun schlicht und einfach in der besonderen Topologie dieser Einrohrheizsysteme, die in nachteilhafter Weise einfach so konzipiert sind, dass die Heizkörper in Reihe geschaltet sind und der jeweils stromabliegende Heizkörper eine umso geringere Vorlauftemperatur bekommt, je größer die abgegebene Wärmeleistung des stromaufwärts liegenden Heizkörpers ist. Gleiches gilt natürlich im umgekehrten Sinne.

Abhilfe konnte hier bislang nur dadurch geschaffen werden, dass die kompletten Heizsysteme samt Vor- und Rücklaufverrohrung ausgetauscht wurden. Diese Maßnahmen sind jedoch äußerst teuer und von daher für die Bewohner kaum bezahlbar. Aus diesen Gründen wird eine solche Regelung in den meisten Fällen nicht durchführbar sein.

Aus der nicht vorveröffentlichten europäischen Patentanmeldung EP 2 434 226 A2 ist ein Verfahren zur energetischen Sanierung von Einrohrheizungen bekannt, bei welchem jeweils eine Heizstrecke mit mehreren Heizkörpern einer Wohnung zugeordnet ist. Jeder Heizkörper verfügt über eine Bypass-Armatur, welche einen Zulauf sowie einen Rücklauf besitzt. Abhängig von der Wärmeabnahme an der Heizstrecke erfolgt einerseits eine Reduktion des Primär-Heizmittelmassenstroms am Wärmeerzeuger und eine gegenläufige dynamische Anpassung des Heizmittelmassenstroms für jeden Heizkörper über eine variable Bypass-Regelung.

Weiterer Stand der Technik ist aus EP 0 150 671 A1 bekannt. Das Dokument GB 1185442 wird als nächstliegender Stand der Technik angesehen.

### Aufgabe

Die Aufgabe der vorliegenden Erfindung besteht daher darin, ein Verfahren und ein System zur Regelung von Einrohrheizsystemen gemäß Oberbegriff von Anspruch 1 vorzuschlagen, das einfach und relativ preisgünstig durchführbar ist und mit möglichst geringem baulichen Aufwand auskommt.

### Kurzusammenfassung und Vorteile der Erfindung

Diese Aufgabe wird durch die Merkmale von Anspruch 1 bzw. des Nebenanspruchs gelöst. Es wird vorgeschlagen, das im Stand der Technik bekannte Verfahren bzw. das Heizsystem derart weiterzubilden, dass zur Regelung der Temperatur in den Heizkörpern der Heizstrecke ein Temperaturdifferenzregler vorgesehen ist, der als eine Eingangsgröße die Temperatur im Zulauf am Beginn der Heizstrecke und die Temperatur am Ende der Heizstrecke als weitere Eingangsgröße verarbeitet, und der ein Ausgangssignal erzeugt, das an ein Regelventil zwecks Regelung des Durchflusses durch die Heizstrecke gesendet wird, und wobei im Betrieb des Heizsystems ein Mindestdurchfluss durch den Regler vorgesehen ist, der nicht unterschritten wird.

In den Unteransprüchen sind vorteilhafte Ausgestaltungen Weiterbildungen und Verbesserungen des jeweiligen Gegenstandes der Erfindung angegeben.

Die vorliegende Erfindung beruht auf der Idee, dass zur Regelung der Temperatur in den Heizkörpern der Heizstrecke ein Temperaturdifferenzregler eingebaut ist, der wenigstens als eine Eingangsgröße die Temperatur im Zulauf am Beginn der Heizstrecke und als weitere Eingangsgröße die Temperatur am Ende der Heizstrecke verarbeitet, insbesondere deren Differenz, und wobei im Betrieb des Heizsystems ein Mindestdurchfluss durch den Regler vorgesehen ist, der nicht unterschritten werden darf.

Hierzu wird in bevorzugter Weise am jeweiligen stromaufseitigen Beginn (am Vorlauf) einer jeweiligen Heizstrecke ein Temperaturfühler montiert, und ein Zweiter am Ende dieser Heizstrecke, das heißt am Ende des Rücklaufs. Dann wird am Beginn oder am Ende dieser Heizstrecke ein Ventil mit elektrischem Stellantrieb montiert. Dieses Ventil kann nun elektrisch angesteuert weiter geöffnet oder geschlossen werden, bis auf einen Minimaldurchlauf, der zur Erhaltung der Regelungsfähigkeit immer erhalten bleiben muss. Die Funktion dieser erfindungsgemäßen Maßnahme wird beschrieben wie folgt:
Wie bei jeder konventionellen anderen Heizungsanlage auch, ist diese auf eine bestimmte Systemspreizung zwischen Vor- und Rücklauf ausgelegt, das heißt Vorlauftemperatur und Rücklauftemperatur werden durch die abgenommene Wärmeleistung bestimmt. Die Vorlauftemperatur wird bei kälteren Außentemperaturen entsprechend höher eingestellt. Es wird nun eine gewünschte Temperaturdifferenz an einem erfindungsgemäß vorzusehenden Regler eingestellt, wobei eine Signalverbindung zu den vorgenannten beiden Temperaturfühlern von Vorlauf und Rücklauf vorgesehen ist. Die Temperaturdifferenz wird am Regler laufend überwacht.

Wird nun eine vorgegebene Temperaturdifferenz kleiner als der Temperaturdifferenz-Sollwert oder liegt er außerhalb einem entsprechenden Temperaturdifferenzintervall, in dem Sinne, dass die Temperaturdifferenz eher zu klein wird, so wird der elektrische Stellantrieb des Durchflussreglers am Beginn oder am Ende der Heizstrecke angesteuert, und verringert den Durchfluss. Hierbei ist es unerlässlich, dass dieses Regelventil nie vollständig schließt, sondern immer einen gewissen Mindestvolumenstrom hindurch lässt, damit die Regelung immer aktiv sein kann. Außerdem wird hierdurch gewährleistet, dass, wenn ein Heizkörper aufgedreht wird, dieser auch mit Wärme versorgt werden kann.

Umgekehrt, wenn der oder die in der Heizstrecke befindlichen Heizkörper Wärme abgeben, weil etwa die Umgebung kälter ist und man heizen muss, so hat dies zur Folge, dass die Temperaturdifferenz zwischen Vor- und Rücklauf steigt. Übersteigt dann die Temperaturdifferenz den am Regler eingestellten Wert oder liegt außerhalb eines entsprechenden erlaubten Intervalls für die Temperaturdifferenz, so wird dies über die Temperaturfühler im Vorlauf bzw. Rücklauf erfasst und erfindungsgemäß bei dieser Regelung verarbeitet, sodass ein Signal erzeugt wird, dass den elektrischen Stellantrieb auf dem Rücklauf- bzw. auf dem Vorlaufventil des Heizkreises ansteuert und weiter öffnet. Dieses Regelventil bleibt dann so lange geöffnet, bis der eingestellte, gewünschte Wert für die Temperaturdifferenz am Regler erreicht ist beziehungsweise wieder unterschritten wird. Dann verringert dieses Regenventil den Durchlauffluss deutlich, und die Überwachung wird fortgesetzt.

Das Regelprinzip ist hier am Beispiel eines 2-Punkt-Reglers beschrieben worden. Anstelle dessen kann jedoch auch ein beliebiges anderes Regelsystem, wie beispielsweise ein P-Regler, ein I-Regler, ein PI-Regler, ein PD-Regler oder ein PID-Regler, verwendet werden. Ein Regelventil hat seine eigene Stromversorgung bevorzugt über ein entsprechendes Kabel, das mit einer Stromquelle verbunden ist. Alternativ können auch Batterien verwendet werden, deren Ladezustand dann kontrolliert werden muss.

### Zeichnungen

Anhand der Zeichnungen werden Ausführungsbeispiele der Erfindung erläutert.
Figur 1 zeigt schematisch einen Schaltplan für ein Einrohrheizsystem nach dem Stand der Technik anhand eines 5-geschossigen Wohnhauses mit drei verschiedenen Einrohr - Heizkreisen, oder Heizstrecken im o.g. Sinne;
Figur 2 zeigt schematisch einen Schaltplan für ein Einrohrheizsystem nach einem bevorzugten Aspekt der Erfindung anhand des Beispiels aus Figur 1;

### Beschreibung von Ausführungsbeispielen

In den Figuren bezeichnen gleiche Bezugszeichen gleiche oder funktionsgleiche Komponenten.

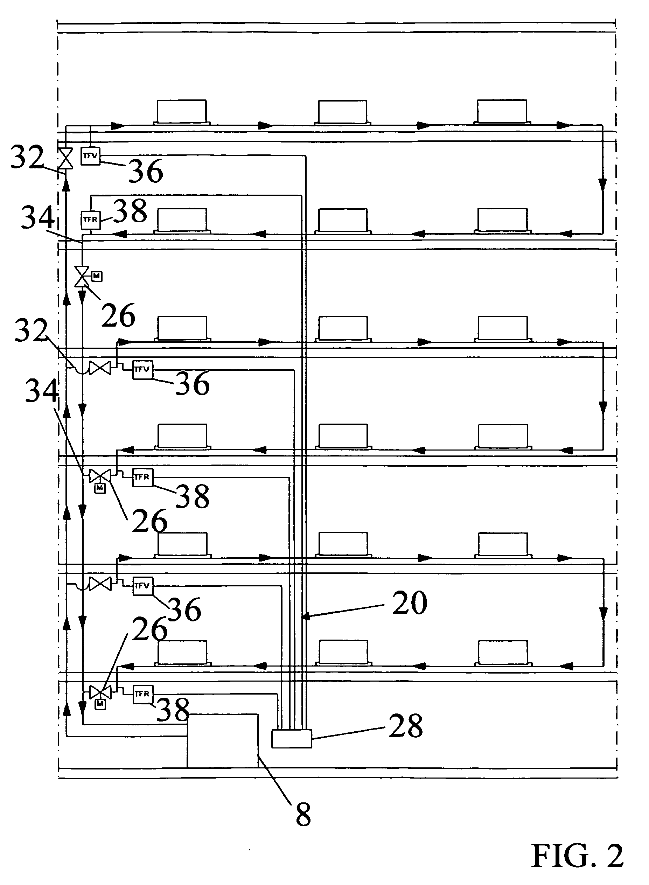

Die in Figur 2 dargestellte Heizanlage ist erfindungsgemäß gegenüber der in Figur 1 abgebildeten abgeändert mit einer Temperaturdifferenzregelung und Temperaturfühlern am stromaufseitigen Vorlauf und am stromabseitigen Rücklaufende des Einrohrstrangs, wobei jeweils die Heizkörper zweier Stockwerke, die jeweils übereinander liegen, eine Heizstrecke aus seriell angeordneten Heizkörpern bilden. Erfindungsgemäß ist genauer gemäß Figur 2 am stromaufseitigen Anfang 32 einer Heizstrecke sowie am stromabseitigen Ende 34 einer Heizstrecke jeweils ein Temperaturfühler vorgesehen, also ein Fühler 36 für die Temperatur des Vorlaufs und ein Fühler 38 für die Temperatur des Rücklaufs. Somit wird die Temperaturdifferenz erfassbar, die über die gesamte Länge der Heizstrecke anfällt, die ihrerseits aus hintereinander geschalteten Heizkörpern besteht. Diese Temperaturfühler werden bevorzugt an jedem der drei in dem Mehrfamilienwohnhaus vorliegenden Einrohrstränge erfindungsgemäß installiert.

Des Weiteren ist ein Regelventil 26 jeweils am stromaufseitigen Ende einer jeweiligen Heizstrecke vorgesehen, das elektrisch ansteuerbar den Durchfluss in die Heizstrecke hinein elektromotorisch regeln kann. Des Weiteren sind Datenübertragungswege bevorzugt in Form von Kabeln 20 vorgesehen von den Temperaturfühlern zu einem im Keller des Hauses vorgesehenen Temperaturdifferenzregler 28, der an zentraler Stelle die Temperaturmesswerte für Vor- und Rücklauf von jeder der drei Heizstrecken erfasst und automatisch weiter verarbeitet mit Hilfe einer vorprogrammierten Ablaufsteuerung. Der Temperaturdifferenzregler 28 erzeugt für jede Heizstrecke ein Ausgangssignal, dass als Steuersignal zum Steuern des Durchflusses durch jedes der drei Regelventile 26 vorgesehen ist, die den jeweiligen Durchfluss durch die drei unabhängigen Heizstrecken steuern. Dieses Steuersignal kann in einem Bereich von 0 - 10 Volt ausgelegt sein, und wird bevorzugt kabelgebunden über Kabel 20 an die Regelventile 26 zwecks Regelung des Durchflusses übertragen. Das Kabel kann entlang der Hauptleitung verlegt werden.

Es wird nun eine gewünschte Temperaturdifferenz an einem erfindungsgemäß vorzusehenden Regler eingestellt, wobei eine Signalverbindung per Kabel oder Funknetzwerk zu den vorgenannten beiden Temperaturfühlern von Vorlauf und Rücklauf vorgesehen ist. Die Temperaturdifferenz wird am Regler laufend überwacht.

Wird nun die vorgegebene Temperaturdifferenz kleiner als der Temperaturdifferenz-Sollwert oder liegt er außerhalb eines entsprechenden Temperaturdifferenzintervalls, in dem Sinne, dass die Temperaturdifferenz eher zu klein wird, so wird der elektrische Stellantrieb des Durchflussreglers am Ende der Heizstrecke angesteuert, und verringert den Durchfluss. Hierbei ist es unerlässlich, dass dieses Regelventil nie vollständig schließt, sondern immer einen gewissen Mindestvolumenstrom hindurch lässt, damit die Regelung immer stattfinden kann. Außerdem wird hierdurch gewährleistet, dass, wenn ein Heizkörper aufgedreht wird, dieser auch mit Wärme versorgt werden kann.

Umgekehrt, wenn der oder die in der Heizstrecke befindlichen Heizkörper Wärme abgeben, weil etwa die Umgebung kälter ist und man heizen muss, so hat dies zur Folge, dass die Temperaturdifferenz zwischen Vor- und Rücklauf der betroffenen Heizstrecke steigt. Übersteigt dann die Temperaturdifferenz den am Regler eingestellten Wert oder liegt außerhalb eines entsprechenden erlaubten Intervalls, so wird dies über die Temperaturfühler im Vorlauf bzw. Rücklauf erfasst und erfindungsgemäß bei dieser Regelung verarbeitet, derart dass ein Signal erzeugt wird, das den elektrischen Stellantrieb auf dem Rücklaufventil des Heizkreises ansteuert und weiter öffnet. Dieses Regelventil bleibt dann so lange geöffnet, bis der eingestellte, gewünschte Wert für die Temperaturdifferenz am Regler erreicht ist, beziehungsweise wieder unterschritten wird. Dann verringert dieses Regenventil den Durchlauffluss um einen vorgegebenen prozentwert des vorherigen Durchflusswerts oder des Maximalwerts, und die Überwachung wird fortgesetzt.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Das Regelventil könnte auch am Beginn einer jeden Heizstrecke angeordnet sein. Die Signale zur Steuerung der Regelventile könnten auch drahtlos übertragen werden. Dann müsste gegebenenfalls das Regelventil eine separate batteriegebundene Stromversorgung besitzen.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

## Patentansprüche

1. Verfahren zur Regelung von Einrohrheizsystemen in Mehrfamilienwohnhäusern, wobei ein eine Vorlauftemperatur führendes Rohr die Heizkörper mehrerer Wohnungen mit Vorlaufwärme versorgt,
wobei mehrere mehreren Wohnungen zugeordnete Heizkörper (18) in Reihe hintereinander geschaltet sind und eine Heizstrecke (16) bilden, wobei der Rücklauf aus einem Heizkörper sich mit dem Vorlauf für den nächsten stromab liegenden Heizkörper mischt, wobei der Beginn der Heizstrecke mit dem am meisten stromauf liegenden Heizkörper gebildet ist,
wobei der Rücklauf aus den in Reihe geschalteten Heizkörpern das Ende der Heizstrecke bildet,
**dadurch gekennzeichnet, dass**
a) zur Regelung des Durchflusses in den Heizstrecken (16) ein Temperaturdifferenzregler (28) vorgesehen ist,
b) der als eine Eingangsgröße die Temperatur im Zulauf am Beginn der Heizstrecke und die Temperatur am Ende der Heizstrecke als weitere Eingangsgröße verarbeitet,
c) und der ein Ausgangssignal erzeugt, das an ein Regelventil (26) zwecks Regelung des Durchflusses durch die Heizstrecke gesendet wird,
d) und wobei im Betrieb des Heizsystems ein Mindestdurchfluss durch den Regler (26) vorgesehen ist, der nicht unterschritten wird.

2. Verfahren gemäß Anspruch 1, wobei Temperaturfühler (36, 38) zur Erfassung von Vorlauf- und Rücklauftemperatur außerhalb oder innerhalb einer Wohnung vorgesehen sind.

3. Verfahren gemäß Anspruch 1, wobei das Regelventil (26) für eine Heizstrecke (16) außerhalb oder innerhalb einer Wohnung zur Regelung des Durchflusses am Vorlauf (10), bevorzugt kurz vor Eintritt der Heizstrecke (16) in eine Wohnung oder kurz nach Austritt aus einer Wohnung, am Rücklauf (11) der Heizstrecke vorgesehen ist.

4. System zur Regelung von Einrohrheizsystemen in Mehrfamilienwohnhäusern, wobei ein eine Vorlauftemperatur führendes Rohr die Heizkörper mehrerer Wohnungen mit Vorlaufwärme versorgt,
wobei mehrere mehreren Wohnungen zugeordnete Heizkörper (18) in Reihe hintereinander geschaltet sind und eine Heizstrecke (16) bilden, wobei der Rücklauf aus einem Heizkörper sich mit dem Vorlauf für den nächsten stromab liegenden Heizkörper mischt, wobei der Beginn der Heizstrecke (16) mit dem am meisten stromauf liegenden Heizkörper gebildet ist,
wobei der Rücklauf aus den in Reihe geschalteten Heizkörpern das Ende der Heizstrecke (16) bildet,
**dadurch gekennzeichnet, dass**
a) zur Regelung des Durchflusses in den Heizstrecken ein Temperaturdifferenzregler (28) vorgesehen ist,
b) der als eine Eingangsgröße die Temperatur im Zulauf am Beginn der Heizstrecke und die Temperatur am Ende der Heizstrecke als weitere Eingangsgröße verarbeitet,
c) und der ein Ausgangssignal erzeugt, das an ein Regelventil (26) zwecks Regelung des Durchflusses durch die Heizstrecke (16) gesendet wird,
d) und wobei im Betrieb des Heizsystems ein Mindestdurchfluss durch den Regler (38) vorgesehen ist, der nicht unterschritten wird.

5. System gemäß Anspruch 4, wobei Temperaturfühler (36, 38) zur Erfassung von Vorlauf- und Rücklauftemperatur außerhalb oder innerhalb einer Wohnung vorgesehen sind.

6. System gemäß Anspruch 4, wobei das Regelventil (26) für eine Heizstrecke (16) außerhalb oder innerhalb einer Wohnung zur Regelung des Durchflusses am Vorlauf, bevorzugt kurz vor Eintritt der Heizstrecke in eine Wohnung oder kurz nach Austritt aus einer Wohnung, am Rücklauf der Heizstrecke vorgesehen ist.

## Claims

1. Method for the regulation of single pipe heating systems in multi-family residential houses, where a pipe carrying a supply-flow temperature supplies the radiators of multiple flats with supply-flow heat,
where multiple radiators (18) corresponding to multiple flats are connected in series and form a heating section (16), where the return flow from a radiator mixes with the supply flow for the subsequent radiator located downstream thereof, where the start of the heating section is formed by the radiator lying the most upstream,
where the reverse flow from the radiators connected in series forms the end of the heating section,
**characterised in that**
a) for the regulation of the flow rate in the heating sections (16) a temperature difference regulator (28) is provided,
b) which as an input parameter processes the temperature in the inlet at the start of the heating section and the temperature at the end of the heating section as a further parameter,
c) and which produces an output signal, which is sent to a regulating valve (26) for regulation of the flow rate through the heating section,
d) and where during operation of the heating system a minimum flow rate through the regulator (26) is provided below which the flow rate does not fall.

2. Method according to claim 1, where temperature sensors (36, 38) for sensing supply-flow temperature and reverse-flow temperature are provided outside or inside of a flat.

3. Method according to claim 1, where the regulating valve (26) for a heating section (16) is provided at the reverse flow (11) of the heating section outside or inside of a flat for regulation of the flow rate at the supply flow (10), preferably shortly before the heating section (16) enters into a flat or shortly after it leaves a flat.

4. System for regulation of single pipe heating systems in multi-family residential houses, where a pipe carrying a supply-flow temperature supplies the radiators of multiple flats with supply-flow heat,
where multiple radiators (18) corresponding to multiple flats are connected in series and form a heating section (16), where the return flow from a radiator mixes with the supply flow for the subsequent radiator located downstream thereof, where the start of the heating section is formed by the radiator lying the most upstream,
where the reverse flow from the radiators connected in series forms the end of the heating section,
**characterised in that**
a) for the regulation of the flow rate in the heating sections a temperature difference regulator (28) is provided,
b) which as an input parameter processes the temperature in the inlet at the start of the heating section and the temperature at the end of the heating section as a further parameter,
c) and which produces an output signal, which is sent to a regulating valve (26) for regulation of the flow rate through the heating section (16),
d) and where during operation of the heating system a minimum flow rate through the regulator (38) is provided below which the flow rate does not fall.

5. System according to claim 4, where temperature sensors (36, 38) for a sensing a supply-flow temperature and a reverse-flow temperature are provided outside or inside of a flat.

6. System according to claim 4, where the regulating valve (26) for a heating section (16) is provided at the reverse flow of the heating section outside or inside of a flat for regulation of the flow rate at the supply flow, preferably shortly before the heating section enters a flat or shortly after it leaves a flat.

## Revendications

1. Procédé de régulation de systèmes de chauffage à tube unique dans des bâtiments résidentiels multifamiliaux, dans lesquels un tube présentant une température d'aller alimente les radiateurs de plusieurs logements en chaleur d'aller, plusieurs radiateurs (18) attribués à plusieurs logements étant montés en série l'un après l'autre et formant un trajet de chauffe (16), le retour provenant d'un radiateur se mélangeant avec l'aller destiné au radiateur suivant situé en aval et le début du trajet de chauffe étant formé avec le radiateur situé le plus en amont,
le retour provenant des radiateurs montés en série formant la fin du trajet de chauffe, **caractérisé en ce que**:
a) il est prévu, pour réguler la circulation dans les trajets de chauffe (16), un régulateur de différence de température (28),
b) lequel traite, comme une valeur d'entrée, la température dans le circuit au début du trajet de chauffe et, comme une autre valeur d'entrée, la température à la fin du trajet de chauffe,
c) et lequel émet un signal de sortie qui est envoyé à une vanne de régulation (26) aux fins de la régulation de la circulation à travers le trajet de chauffe,
d) et il est prévu, pour le fonctionnement du système de chauffage, un débit minimal à travers le régulateur (26) en dessous duquel on ne peut pas descendre.

2. Procédé selon la revendication 1, dans lequel il est prévu des capteurs de température (36, 38) pour détecter une température d'aller et de retour à l'extérieur ou à l'intérieur d'un logement.

3. Procédé selon la revendication 1, dans lequel la vanne de régulation (26) pour un trajet de chauffe (16) est prévue à l'extérieur ou à l'intérieur d'un logement pour réguler la circulation à l'aller (10), de préférence peu avant l'entrée du trajet de chauffe (16) dans un logement ou peu après la sortie d'un logement, sur le retour (11) du trajet de chauffe.

4. Système de régulation de systèmes de chauffage à tube unique dans des bâtiments résidentiels multifamiliaux, dans lesquels un tube présentant une température d'aller alimente les radiateurs de plusieurs logements en chaleur d'aller, plusieurs radiateurs (18) attribués à plusieurs logements étant montés en série l'un après l'autre et formant un trajet de chauffe (16), le retour provenant d'un radiateur se mélangeant avec l'aller destiné au radiateur suivant situé en aval et le début du trajet de chauffe (16) étant formé avec le radiateur situé le plus en amont,
le retour provenant des radiateurs montés en série formant la fin du trajet de chauffe (16),
**caractérisé en ce que**:
a) il est prévu, pour réguler la circulation dans les trajets de chauffe, un régulateur de différence de température (28),
b) lequel traite, comme une valeur d'entrée, la température dans le circuit au début du trajet de chauffe et, comme une autre valeur d'entrée, la température à la fin du trajet de chauffe,
c) et lequel émet un signal de sortie qui est envoyé à une vanne de régulation (26) aux fins de la régulation de la circulation à travers le trajet de chauffe (16),
d) et il est prévu, pour le fonctionnement du système de chauffage, un débit minimal à travers le régulateur (38) en dessous duquel on ne peut pas descendre.

5. Système selon la revendication 4, dans lequel il est prévu des capteurs de température (36, 38) pour détecter une température d'aller et de retour à l'extérieur ou à l'intérieur d'un logement.

6. Système selon la revendication 4, dans lequel la vanne de régulation (26) pour un trajet de chauffe (16) est prévue à l'extérieur ou à l'intérieur d'un logement pour réguler la circulation à l'aller, de préférence peu avant l'entrée du trajet de chauffe dans un logement ou peu après la sortie d'un logement, sur le retour du trajet de chauffe.
